# EUROPEAN PATENT SPECIFICATION

(11) **EP 2 026 287 B1**
(45) Date of publication and mention of the grant of the patent: **01.11.2017**
(21) Application number: 08010901.0
(22) Date of filing: 16.06.2008
(51) Int. Cl.: G07C 5/08, B62J 27/00

(54) **Event data recorder, motorcycle, and information recording method**
Ereignisdatenschreiber, Motorrad und Informationsaufzeichnungsverfahren
Enregistreur de données d'événement, motocyclette et procédé d'enregistrement d'informations

(30) Priority: 18.06.2007 JP 2007160596; 18.06.2007 JP 2007160597; 18.06.2007 JP 2007160598
(43) Date of publication of application: 18.02.2009
(73) Proprietor: KAWASAKI JUKOGYO KABUSHIKI KAISHA, Kobe shi, Hyogo 650-8670 (JP)
(72) Inventor: Nakaya, Akira, Akashi-shi Hyogo 673-8666 (JP); Okabe, Yasuhisa, Akashi-shi Hyogo 673-8666 (JP); Honda, Hideo, Akashi-shi Hyogo 673-8666 (JP)
(74) Representative: Leinweber & Zimmermann

(56) References cited:
- EP-A1- 1 197 426
- US-B1- 6 185 490

## Description

### TECHNICAL FIELD

The present invention relates to an event data recorder which stores output information of various devices when, for example, an accident occurs so that a situation or the like of the accident can be analyzed, a motorcycle, and an information recording method.

### BACKGROUND ART

Conventionally, an event data recorder (EDR) is known, which is built into automobile to record information relating to traffic accidents. The event data recorder detects a shock at the occurrence of the accident using an acceleration sensor and stores in a ROM (memory) output information of the various devices mounted in the automobile before and after a time point when a shock is detected. After the occurrence of the accident, the event data recorder is analyzed, thereby knowing behaviors of the automobile such as the operation of a brake or a vehicle speed at the occurrence of the accident.

However, in a case where an event data recorder using the output information of the acceleration sensor as a trigger is applied to a lightweight vehicle such as a motorcycle, a personal watercraft (PWC), a straddle-type off-road vehicle, shocks occurring in situations other than the accident may activate the event data recorder in situation where the activation is unnecessary. Also, in a case where the motorcycle has fallen on a ground surface while skidding thereon, but does not collide with any object, the shock applied on a vehicle body at the occurrence of the accident tends to be small, and therefore, the event data recorder is not activated.
EP 1 197 426 A1 discloses an automatic accident informing apparatus having the features of the preamble of claim 1.
US 6,185,490 B1 discloses a vehicle crash data recorder.

### SUMMARY OF THE INVENTION

An event data recorder of the present invention is characterized by the features of claim 1. It comprises a falling determination system which determines whether or not a vehicle has fallen; a
recording device which stores data output from devices mounted in the vehicle; and a controller which controls a recording operation of the recording device based on determination of the falling detecting system.

In accordance with such a configuration, since the event data recorder is controlled based on the falling of the vehicle, as a trigger, activation of the event data recorder due to a shock other than the accident does not substantially take place, and the event data recorder is able to cause the recording device to store data output from the devices even if an accident with a small shock occurs. As a result, activation precision of the event data recorder built into the motorcycle can be improved.

The falling determination system may include a posture detecting sensor which detects a posture of the vehicle, and a determination means which determines whether or not the vehicle has fallen based on a detection result of the posture detecting sensor.

When the vehicle has fallen, it falls and its posture changes. The determination means determines that the posture of the vehicle is outside a specified range, from a detection result of the posture detecting sensor, thereby detecting that the vehicle has fallen. Thus, by determining that the vehicle has fallen based on the change in the posture of the vehicle, the behavior of the vehicle (e.g., motorcycle) which is likely to fall, at the occurrence of the accident, can be known correctly.

The event data recorder may further comprise an input device which is operated by a user of the vehicle. The controller may be configured to control a recording operation of the recording device, in response to an operation of the input device.

In accordance with such a configuration, the data output from the devices mounted in the vehicle can be stored in the recording device as the user likes, and the driving state can be recorded at times other than occurrence of the falling. Therefore, the user can make settings, etc for the vehicle with reference to the recorded information. This improves convenience.

A motorcycle of the present invention is characterized by the features of claim 2. It comprises an event data recorder including: a falling determination system which determines whether or not a vehicle body has fallen; a recording device which stores data output from devices' mounted in the vehicle body; and a controller which controls a recording operation of the recording device based on determination of the falling detecting system.

In accordance with such a configuration, since the event data recorder is controlled based on falling of the motorcycle, as a trigger, activation of the event data recorder due to a shock other than the accident does not substantially take place, and the event data recorder is able to cause the recording device to store data output from the devices even if a small shock occurs, for example, the vehicle has fallen while skidding on the ground surface. As a result, activation precision of the event data recorder built into the motorcycle can be improved.

The motorcycle may further comprise a bank angle detecting device which detects a bank angle of the vehicle body. The recording device may be configured to store the data output from the bank angle detecting device.

In accordance with such a configuration, since the bank angle of the vehicle body which is generated when the motorcycle has fallen is stored in time series in the recording device, the posture of the vehicle body at the occurrence of the accident can be analyzed.

The motorcycle may further comprise an engine which is mounted in the vehicle body and serves as a driving power generation source. The recording device may be positioned behind a cylinder part of the engine.

In such a configuration, since the cylinder part of the engine protects the recording device of the event recorder from a shock applied to the motorcycle from forward, the recorded data can be reliably saved even at the occurrence of the accident.

An information recording method of the present invention is characterized by the features of claim 3, comprising a driving state determination step for determining whether or not a vehicle is driving; a falling determination step for determining whether or not the vehicle has fallen; and a recording step for recording information output from devices mounted in the vehicle at least before the vehicle has fallen, when it is determined that the vehicle has fallen during driving.

In such a method, since the output information of the devices are recorded based on the falling of the vehicle as the trigger, they can be recorded regardless of whether the shock generated in the vehicle is large or small. For example, execution of the recording step due to a shock other than the accident does not substantially take place, and the output information of the devices corresponding to an accident with a small shock can be reliably recorded.

The above and further objects and features of the invention will more fully be apparent from the following detailed description with accompanying drawings.

### BRIEF DESCRIPTION OF THE DRAWINGS

Fig. 1 is a left side view of a motorcycle according to a first embodiment of the present invention;
Fig. 2 is a block diagram showing an event data recorder mounted in the motorcycle of Fig. 1;
Fig. 3 is a cross-sectional view of a falling sensor in the event data recorder of Fig. 2, as viewed from the front;
Fig. 4 is a cross-sectional view of the falling sensor of Fig. 3, as viewed from the side;
Fig. 5 is a plan view showing a meter unit in the motorcycle of Fig. 1;
Fig. 6 is a flowchart showing the operation of the event data recorder of Fig. 2;
Fig. 7 is a view showing latest failure information stored in a recording device of the event data recorder of Fig. 2;
Fig. 8 is a view showing an integrated time for each engine speed which is stored in the recording device of the event data recorder of Fig. 2;
Fig. 9 is a view showing failure frequency information which is stored in the recording device of the event data recorder of Fig. 2;
Fig. 10 is a front view of the motorcycle according to a second embodiment of the present invention;
Fig. 11 is a schematic view showing the falling sensor mounted to the motorcycle of Fig. 10, as viewed from the front;
Fig. 12 is a block diagram showing an event data recorder mounted in a motorcycle according to a third embodiment of the present invention;
Fig. 13 is a block diagram showing a tire pressure monitoring system which is used in the event data recorder of Fig. 12;
Fig. 14 is a flowchart showing an operation of the event data recorder of Fig. 12;
Fig. 15 is a block diagram showing an event data recorder built into a motorcycle according to a fourth embodiment of the present invention;
Fig. 16 is a flowchart showing the operation of the event data recorder of Fig. 15;
Fig. 17 is a block diagram showing an event data recorder built into a motorcycle according to a fifth embodiment of the present invention; and
Fig. 18 is a block diagram showing an event data recorder built into a motorcycle according to a sixth embodiment of the present invention.

### DETAILED DESCRIPTION OF THE PREFERRED EMBODIMENTS

Hereinafter, embodiments of the present invention will be described with reference to the drawings. Hereinbelow, the directions are referenced from the perspective of a driver (not shown) mounting a motorcycle.

### (Embodiment 1)

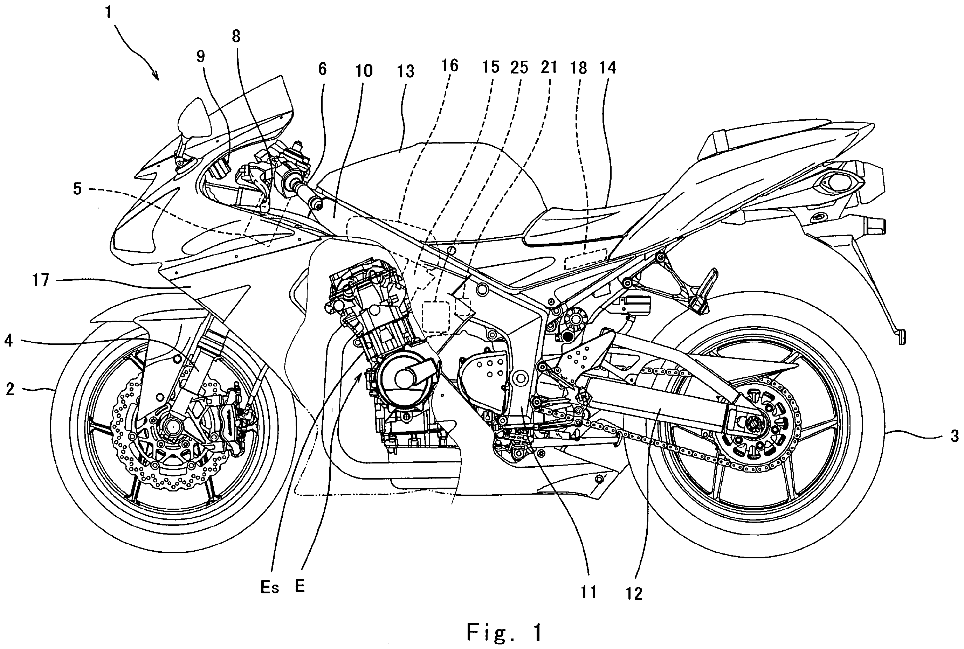

Fig. 1 is a left side view of a motorcycle 1 according to a first embodiment of the present invention. As shown in Fig. 1, the motorcycle 1 includes a front wheel 2 and a rear wheel 3. The front wheel 2 is rotatably mounted to a lower end portion of a front fork 4 extending substantially vertically. The front fork 4 is mounted on a steering shaft (not shown) via an upper bracket (not shown) provided at an upper end portion thereof, and an under bracket (not shown) provided below the upper bracket. The steering shaft is rotatably mounted by the head pipe 5. A bar-type steering handle 6 extending rightward and leftward is attached to the upper bracket. By rotating the handle 6, the driver is able to rotate the front wheel 2 around the steering shaft in a desired direction.

The grip of the handle 6 which is gripped by a right hand of the driver is a throttle grip (not shown) which is rotated by twisting a wrist of the driver to control a driving speed. A clutch lever 8 is provided in front of a grip of the handle 6 which is gripped with the driver's left hand. A meter unit 9, which displays the driving speed, an engine speed, etc and has an input device 24 to be described later, is provided in front of the handle 6.

A pair of right and left main frames 10 extend rearward from the head pipe 5 so as to be slightly tilted in a downward direction. A pair of right and left pivot frames 11 are respectively coupled to rear portions of the main frames 10. Swing arms 12 extending substantially in a forward and rearward direction are respectively pivotally mounted at front end portions thereof to the pivot frames 11. The rear wheel 3, which is a drive wheel, is rotatably mounted to rear end portions of the swing arms 12. A fuel tank 13 is disposed behind the handle 6. A straddle-type seat 14 is provided behind the fuel tank 13.

The Engine E is mounted on the main frames 10 and the pivot frames 11 between the front wheel 2 and the rear wheel 3. A throttle device 15 is disposed inside the main frames 10 and is coupled to intake ports of the engine E. An air cleaner box 16 is disposed below the fuel tank 13 and is coupled to an upstream side of the throttle device 15. The air cleaner box 16 is configured to take in fresh air utilizing a wind pressure from forward. A cowling 17 is mounted to extend over a front region and side regions of the vehicle body so as to cover the engine E and other components. An ECU (electronic control unit) 18 is accommodated into an inner space below the seat 14 and is configured to execute various controls. A recording device 25, which is described later, is disposed just behind a cylinder part Es of the engine E, and is fastened to the main frame 10 via brackets (not shown). A falling sensor 21 is attached on an inner side surface of the pivot frame 11 in the vicinity of the recording device 25.

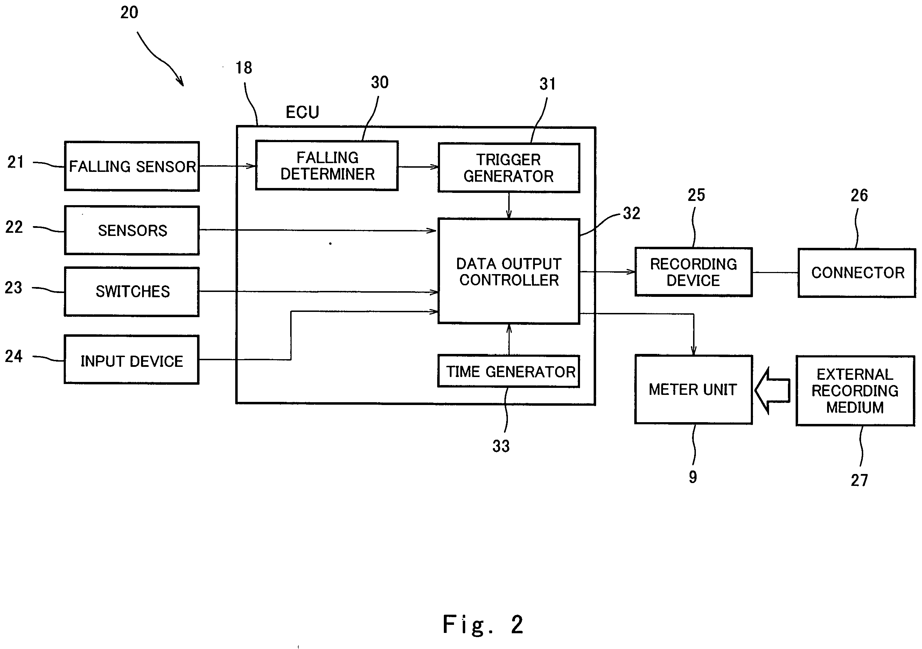

Fig. 2 is a block diagram showing an event data recorder 20 built into the motorcycle of Fig. 1. As shown in Fig. 2, the event data recorder 20 includes the ECU 18, the falling sensor 21 (to be described later), sensors (devices) 22, switches (devices) 23, the input device 24 (to be described later), the recording device 25, and the meter unit 9. The falling sensor (posture detecting sensor) 21 which detects that the motorcycle 1 is tilted a predetermined angle or larger in a rightward and leftward direction, the sensors 22, the switches 23, and the input device 24 which is operated by the driver are coupled to the ECU 18. The recording device 25 which stores data output from the sensors 22 and the switches 23, and the meter unit 9 which enables writing/reading data to/from the external recording medium 27, are coupled to the ECU 18.

The sensors 22 include an engine speed sensor, a throttle position sensor, a gear position sensor, a vehicle speed sensor, an acceleration sensor, a gyro sensor (bank angle detecting device), a GPS sensor, a suspension stroke sensor, a tire pressure sensor, a grip pressure-sensitive sensor, a water temperature sensor, an hydraulic sensor, a driver monitoring sensor, a two-person detecting sensor, etc.

The engine speed sensor is configured to detect the number of rotations of the crankshaft of the engine E. The throttle position sensor is configured to detect an opening degree of a throttle valve of the throttle device 15. The gear position sensor is configured to detect a gear position of a transmission. The vehicle speed sensor is configured to detect a driving speed of the motorcycle 1. The acceleration sensor is configured to detect a driving acceleration of the motorcycle 1. The gyro sensor is configured to detect a posture of the vehicle body. The gyro sensor is configured to detect an angular speed of tilting of the vehicle body in the rightward and leftward direction, thereby detecting the bank angle of the vehicle body. The GPS sensor is coupled to a GPS (global positioning system) and is configured to obtain positional information of the motorcycle 1. The suspension stroke sensor is configured to detect an extended or contracted state of a suspension which absorbs a shock applied to the motorcycle 1, and may be, for example, a displacement sensor configured to detect a distance between an upper position and a lower position of the suspension.

The tire pressure sensor is configured to detect a tire pressure of the front wheel 2 and a tire pressure of the rear wheel 3. The grip pressure-sensitive sensor is a pressure sensor configured to detect a pressure applied by the driver's operation for gripping the right and left grips of the handle 6. The water temperature sensor is configured to detect a temperature of cooling water. The hydraulic sensor is configured to detect a pressure in each of various hydraulic lines. The driver monitoring sensor is a known sensor configured to detect behaviors of the driver, for example, blinking. The two-person detecting sensor is a sensor which detects a distribution of a pressure applied on the seat 14, a sensor which detects that a rear suspension is contracted in a predetermined amount larger than a front suspension, or a sensor which detects a load applied by a fellow-passenger to foot steps.

The switches 23 include a brake switch, a clutch switch, a stand switch, etc. The brake switch is configured to detect whether not the driver has operated the brake. The clutch switch is configured to detect whether or not the driver has operated a clutch. The stand switch is configured to detect a down position or an up position of a side stand which is configured to contact a ground surface to support the vehicle body in a slightly tilted position while the motorcycle 1 is stopped in a place.

The recording device 25 is configured to record data output from the sensors 22 and the switches 23 attached on the motorcycle 1 in times series while an electric power supply is in an on-state, and to overwrite data area in the order from least recent to most recent if the data exceeds a memory capacity. The recording device 25 is provided with a diagnostic connector 26 which is connected with a personal computer and the like in a maintenance company to download the data in the recording device 25.

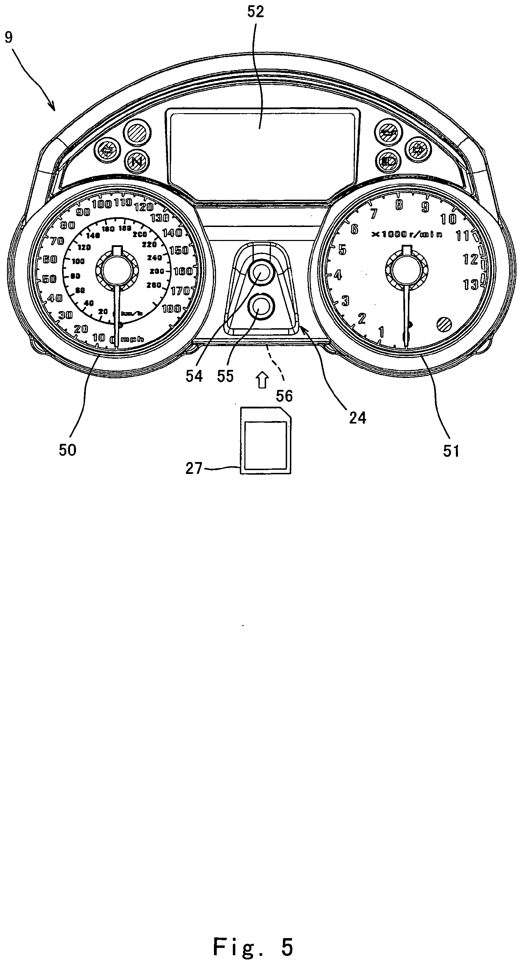

The ECU 18 includes a falling determiner 30, a trigger generator 31, a data output controller 32, and a time generator 33. The falling determiner 30 is configured to determine whether or not the motorcycle 1 has fallen based on the data output from the falling sensor 21. That is, the falling sensor 21 and the falling determiner 30 form a falling determination system system. The trigger generator 31 is configured to send a trigger to the data output controller 32 if the falling determiner 30 determines that the motorcycle 1 has fallen. The data output controller 32 is configured to cause the recording device 25 to store the data output from the sensors 22 and the switches 23 in a ROM such that the data is unable to be overwritten, upon receiving the trigger from the trigger generator 31. That is, the trigger generator 31 and the data output controller 32 form a controller. The data output controller 32 is configured to cause the recording device 25 to start storing the data output from the sensors 22 and the switches 23, upon a recording start input section 54 (Fig. 5) of the input device 24 to be described later being operated, and to cause the recording device 25 to terminate storing the data, upon a recording termination input section 55 (Fig. 5) of the input device 24 being operated. The time generator 33 is configured to send current time information to the data output controller 32 as desired.

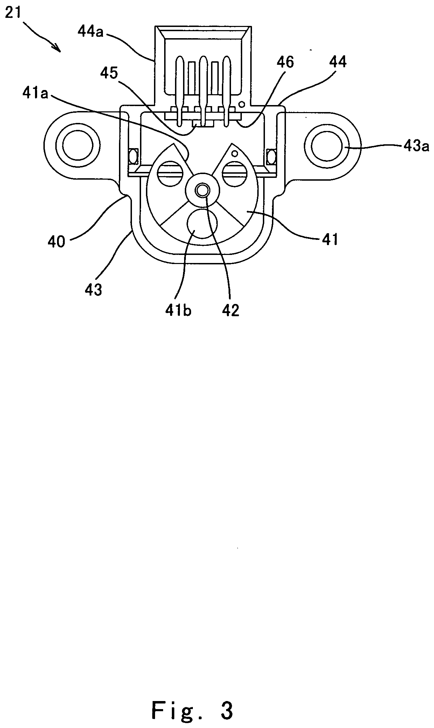

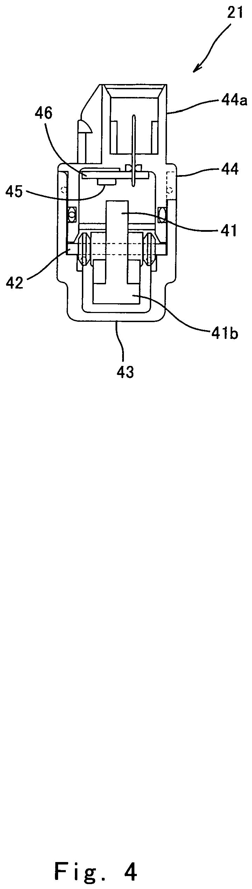

Fig. 3 is a cross-sectional view of the falling sensor 21 in the event data recorder 20 of Fig. 2, as viewed from the front. Fig. 4 is a cross-sectional view of the falling sensor 21 of Fig. 3, as viewed from the side. As shown in Figs. 3 and 4, the falling sensor 21 includes within a casing 40 a magnetized movement 41 which swings like a pendulum and is rotatably mounted to a rotational shaft 42. The case 40 includes a lower case 43 and an upper case 44. Mounting seats 43a are provided on the lower case 43 by which the lower case 43 is fastened to the pivot frame 11 or the main frame 10 (see Fig. 1). A circuit board 46 is mounted in an interior of the upper case 44. A HALL effect sensor IC 45 is provided on the circuit board 46 to detect that the movement 41 has been rotated a predetermined angle or larger. The circuit board 46 has a detection circuit which outputs a detection signal when the HALL effect sensor IC 45 detects that the movement 41 has been rotated the predetermined angle or larger.

A connector portion 44a is formed in the upper case 44 to accommodate an electric power supply coupled to the circuit board 46 and an earth wire and terminals for outputting the detection signal. The movement 41 has in an upper part thereof a cut portion 41a with a specified open angle to be laterally symmetric with respect to a reference position, and in a lower part thereof a spindle portion 41b positioned so that the spindle portion 41b and the cut portion 41a are symmetric with respect to the rotational shaft 42. The HALL effect sensor IC 45 is unipolar-sensitive, and is configured to be able to detect that the movement 41 has been rotated the predetermined angle or larger when the movement 41 has been rotated and a south pole magnetized at a specified position of the movement 41 is opposite to the Hall effect IC 45.

Fig. 5 is a plan view showing the meter unit 9 of the motorcycle 1 of Fig. 1. As shown in Fig. 5, the meter unit 9 includes a speed meter 50, a tachometer 51, a display panel 52, the input device 24, and an external recording medium mounting portion 56. A calculator (not shown) is provided inside the meter unit 9. The input device 24 is provided in a part of the meter unit 9. To be specific, the input device 24 includes the recording start input section 54 and the recording termination input section 55, which are operated by the driver. The external recording medium mounting portion 56 has a slot to which the external recording medium 27 (Fig. 2) such as a memory card is mountable so that the data is written to and written out from the external recording medium 27.

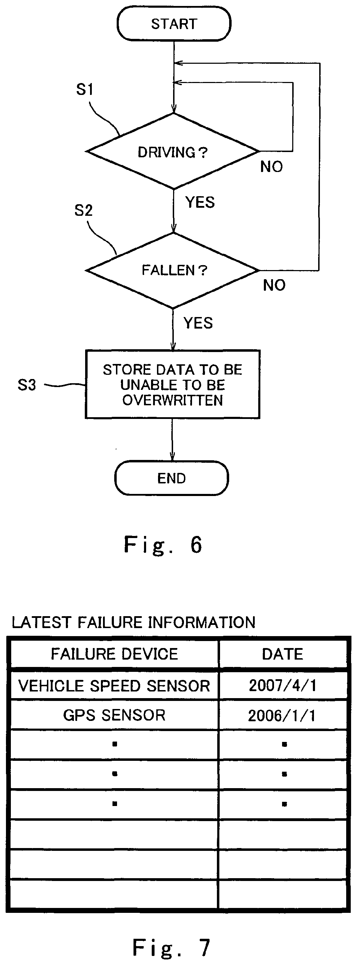

Subsequently, the operation of the event data recorder 20 will be described. Fig. 6 is a flowchart showing the operation of the event data recorder of Fig. 2. As shown in Figs. 2 and 6, when the driver turns on an electric power supply initially, the data output controller 32 of the ECU 18 causes the recording device 25 to store the data output from the sensors 22 and the switches 23, and to overwrite data area in the order from least recent to most recent if the data exceeds a memory capacity. Then, it is determined whether or not the motorcycle is driving with reference to, for example, the data output from the speed sensor (step S1: driving state determination step).

If it is determined No, the process returns to step S1. If it is determined Yes, the falling determiner 30 determines whether or not the falling sensor 21 continues to output the detected state for a specified time, because of the fact that the vehicle body has fallen due to occurrence of an accident in driving and continues to be tilted a predetermined angle or larger (step S2: falling determination step). If it is determined No, the process returns to step S1. If it is determined Yes, the trigger generator 31 sends a trigger to the data output controller 32, which causes the recording device 25 to store the data output from the sensors 22 and the switches 23 such that the data are unable to be overwritten, for a specified time period (e.g., 30 seconds) before and after the time point when the data output controller 32 has received the trigger (step S3: recording step). The driving state determination step, the falling determination step, and the recording step are executed by programs stored in the ECU 18.

The data stored in the recording device 25, which is peculiar to the motorcycle, may include the bank angle of the vehicle body which is output from the gyro sensor (bank angle detecting device), the pressure applied by the driver's gripping operation which is output from the grip pressure-sensitive sensor, etc. Since the bank angle of the vehicle body which is generated when the motorcycle 1 has fallen is stored in the recording device 25 in time series, the posture of the vehicle body before and after occurrence of the accident can be analyzed. Since the pressure applied by the driver's gripping operation which is generated when the motorcycle 1 has fallen is stored in the recording device 25 in time series, the timing when the hand of the driver comes off the handle before and after occurrence of the accident.

Even if the falling determiner 30 does not determine that the motorcycle 1 has fallen, the data output controller 32 causes the recording device 25 to store the data output from the sensors 22 and the switches 23 such that the data is unable to be overwritten, from the time point when the driver has operated the recording start input section 54 of the input device 24. Then, at the time point when the driver has operated the recording termination input section 55, the data output controller 32 causes the recording device 25 to terminate storing the data output from the sensors 22 and the switches 23 such that the data is unable to be overwritten.

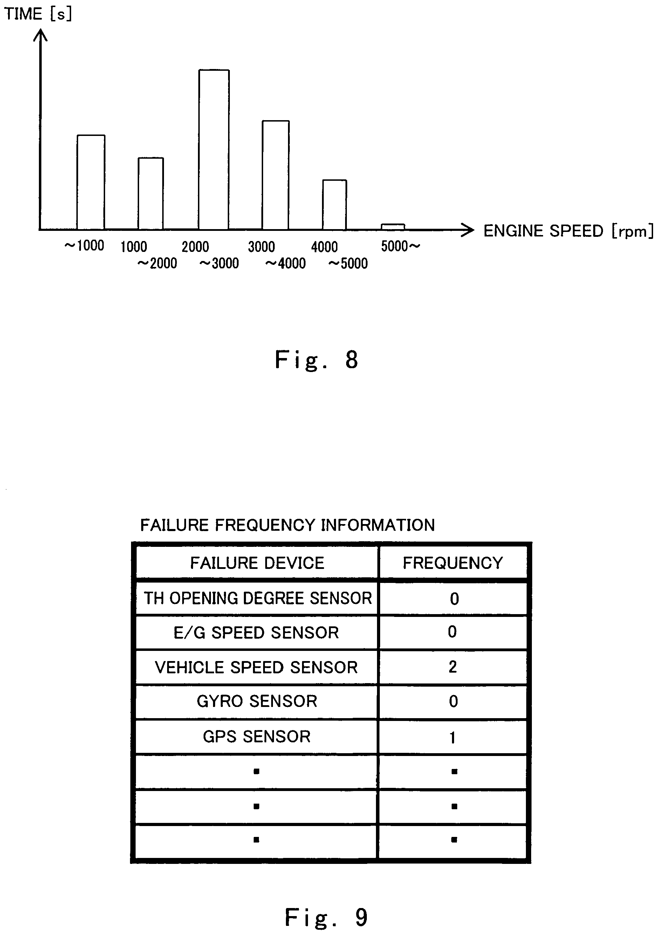

In addition to these data, the data output controller 32 causes the recording device 25 to store various analysis data described below. Fig. 7 is a view showing latest failure information stored in the recording device 25 of the event data recorder 20 of Fig. 2. Fig. 8 is a view showing an integrated time for each engine speed which is stored in the recording device 25 of the event data recorder 20 of Fig. 2. Fig. 9 is a view showing failure frequency information which is stored in the recording device 25 of the event data recorder 20 of Fig. 2.

As shown in Fig. 7, the data output controller 32 causes the recording device 25 to store as data, information indicating past failures of the sensors 22 and the switches 23 and dates of the failures, which data are arranged in the order from most recent to least recent. Also, as shown in Fig. 8, the data output controller 32 integrates the data output from the engine speed sensor from when the motorcycle is new and stores use time for each of engine speeds. Furthermore, as shown in Fig. 9, the data output controller 32 causes the recording device 25 to store as data the frequency of past failures for each of the sensors 22 and the switches 23.

By connecting the personal computer or the like to the diagnostic connector 26 of the recording device 25 in the maintenance company or the like, data of the recording device 25 can be downloaded to the personal computer. Also, by mounting the external recording medium 27 to the external recording medium mounting portion 56 of the meter unit 9 by the driver, the data of the recording device 25 can be downloaded to the external recording medium 27. The data stored in the recording device 25 are data for latest several minutes during an off-state of the electric power supply. Alternatively, the data for latest several minutes may be written out to the external recording medium 27 during the off-state of the electric power supply and may be cleared during an on-state of the electric power supply.

In accordance with the above described configuration, the event data recorder 20 is controlled based on the falling of the motorcycle 1 as a trigger. Therefore, activation of the event data recorder 20 due to a shock other than the accident does not substantially take place. In addition, even when the motorcycle 1 has fallen with a small shock while skidding on the ground surface, the data output from the sensors 22 and the switches 23 can be stored in the recording device 25 so as to be unable to be overwritten. As a result, activation precision of the event data recorder 20 built into the motorcycle 1 can be improved.

In addition, the input device 24 which is operated by the driver is provided. The input device 24 enables the driver to cause the recording device 25 to store the data output from the sensors 22 and the switches 23 as the driver likes so that driving states can be recorded at times other than occurrence of falling. Therefore, the user can make settings, etc for the motorcycle 1, with reference to those recorded information. This improves convenience. Since the recording device 25 is positioned just behind the cylinder part Es of the engine E, the cylinder part Es of the engine E protects the recording device 25 from a shock applied from forward, which results from the collision of the motorcycle 1 with an other object in an accident. As a result, the recording device 25 can save the recorded data.

Whereas in the present embodiment, it is determined that the motorcycle 1 has fallen when the falling sensor 21 detects that the vehicle body is tilted a predetermined angle or larger during driving, it may alternatively be determined that the motorcycle 1 has fallen if a time-lapse change of a tilting angle of the vehicle body is outside a specified range. In a further alternative, an angle (vehicle body tilting angle) made between a fat plane perpendicular to a rotational shaft of the rear wheel 3 and a horizontal plane may be used as the information indicating the posture of the vehicle body. The posture detecting sensor may be a bank angle sensor, an acceleration sensor, or a gyro sensor. It may be determined whether or not the motorcycle 1 has fallen, based on a posture generated by rotation around at least one of three axes, i.e., a driving axis, a vertical axis, and a horizontal axis perpendicular to the driving axis and the vertical axis, instead of the posture (tilting angle) of the vehicle body generated by rotation around one axis direction. In that case, the posture (tilting angle) of the vehicle body generated by rotation around the horizontal axis perpendicular to the driving axis and the vertical axis may be stored in the recording device 25, in order to be able to know raising of the rear wheel or the behavior of the vehicle body such as skidding.

A steering angle sensor may be provided to detect a rotational angle (angle of the handle 6) of the front wheel 2, and the recording device 25 may store data output from the steering sensor. The falling condition (bank angle, specified time, bank angle change amount per unit time, etc) for determining whether or not the motorcycle 1 has fallen may be varied between when the motorcycle 1 is driving straight ahead and when the motorcycle 1 is turning (e.g., the bank angle used to determine whether or not the motorcycle 1 has fallen may be set smaller when the motorcycle 1 is driving straight ahead).

The bank angle used to determine whether or not the motorcycle 1 has fallen may be varied according to at least one of a driving speed and a turning curve (curve radius). For example, when the driving speed is higher, the bank angle made when the motorcycle 1 is driving around a curve is larger. Therefore, a bank angle *θ* 1 used to determine whether or not the motorcycle 1 has fallen when the driving speed is higher may be set larger than a bank angle *θ* 2 used to determine whether or not the motorcycle 1 has fallen when the driving speed is lower.

In a case where the turning radius is detectable using a handle angle or the like, a bank angle *θ* 3 used to determine whether or not the motorcycle 1 has fallen when the turning radius is larger may be set larger than a bank angle *θ* used to determine whether or not the motorcycle 1 has fallen when the turning radius is smaller. Thus, the ECU may obtain a centrifugal force applied to the vehicle body by calculation or from a data base, and may determine that a bank angle with which the motorcycle 1 has fallen even under application of the centrifugal force to the vehicle body is a bank angle with which the motorcycle 1 has fallen.

Even when it is detected that the motorcycle 1 has fallen based on the fact that the posture of motorcycle 1 is changed while turning, but if it is determined that the motorcycle 1 continues to be driving after the turning, the operation of the event data recorder may be returned to a normal operation (operation performed when no accident occurs). For example, if a specified normal driving information is detected after starting storing the data output from the devices in the recording device so as to be unable to be overwritten upon detecting the falling, overwriting forbidding may be cancelled. The normal driving information may be, for example, the driving state is continued or the bank angle is returned to that during straight-ahead driving, etc, after a lapse of a specified time from the time point when it is determined whether or not the motorcycle has fallen. Such a configuration is applicable in the same manner for factors other than the bank angle, such as a specified time for determining whether or not the motorcycle 1 has fallen, or a bank angle change amount per unit time.

### (Embodiment 2)

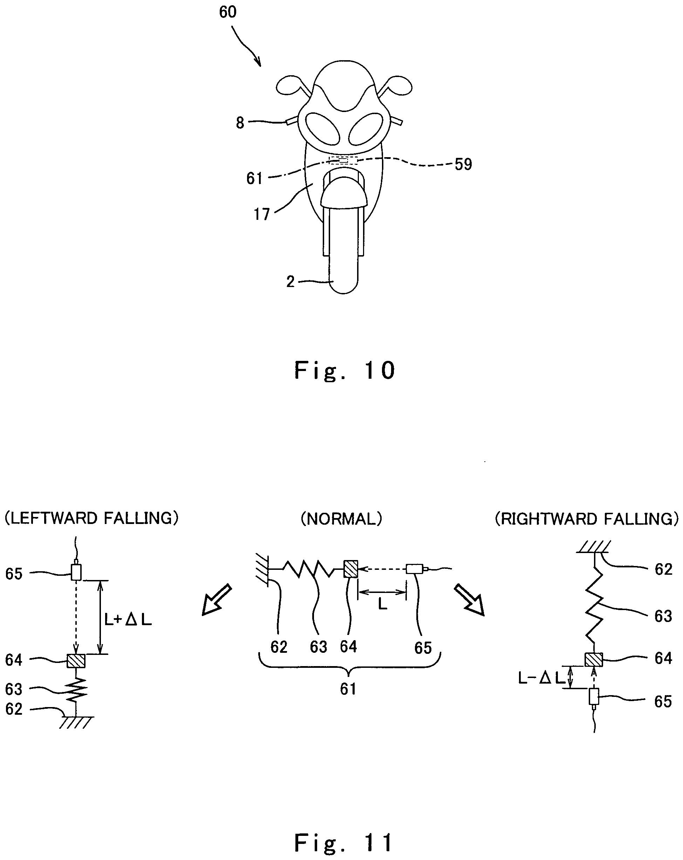

Fig. 10 is a front view of a motorcycle 60 according to a second embodiment of the present invention. Fig. 11 is a schematic view showing a falling sensor 61 attached to the motorcycle 60 of Fig. 10, as viewed from the front. As shown in Fig. 10, the falling sensor 61 of the present embodiment is an acceleration sensor whose acceleration detecting direction conforms to the rightward and leftward direction. The falling sensor 61 is formed into a chip by a MEMS technique and built into an ECU 59. To be more specific, as schematically shown in Fig. 11, the falling sensor 61 includes a fixed part 62, a spring member 63 which is coupled at one end thereof to the fixed part 62 and is extendable and compressible in the rightward and leftward direction, a spindle member 64 coupled to an opposite end of the spring member 63, and a displacement meter 65 which is fixed so that a distance with respect to the fixed part 62 is unvariable and detects a distance with respect to the spindle member 64 in the rightward and leftward direction.

In a normal state in which the motorcycle 60 is driving, jumping, etc, a large acceleration in the rightward and leftward direction is not applied to the vehicle body. So, the amount of extension and compression of the spring member 63 in the rightward and leftward direction does not become a predetermined value or larger, and the distance between the spring member 64 and the displacement meter 65 is approximately **L.** In a case where the vehicle body has fallen to the right, the spindle member 64 is subjected to a gravitational force in the direction to extend the spring member 63. So, the distance between the spring member 64 and the displacement meter 65 is **L-Δt.** On the other hand, in a case where the vehicle body has fallen to the left, the spindle member 64 is subjected to a gravitational force in the direction to compress the spring member 63. So, the distance between the spring member 64 and the displacement meter 65 is **L+Δt.** That is, when the distance between the spring member 64 and the displacement meter 65 is **L- Δt** or **L+ Δt,** the ECU 59 determines that the motorcycle 1 has fallen.

In accordance with the above described configuration, since the falling sensor 61 is built into the ECU 59, a cable connecting the sensor to the ECU may be omitted, and therefore, an error due to disconnection or the like can be prevented. The other configuration is identical to that of the first embodiment, and will not be further described.

### (Embodiment 3)

An event data recorder of a third embodiment includes a tire air pressure sensor which detects a tire pressure, and an accident determination system which determines whether or not an accident has occurred, based on data output from the tire pressure sensor, and a controller is configured to control a recording operation of the recording device based on the determination of the accident determination system.

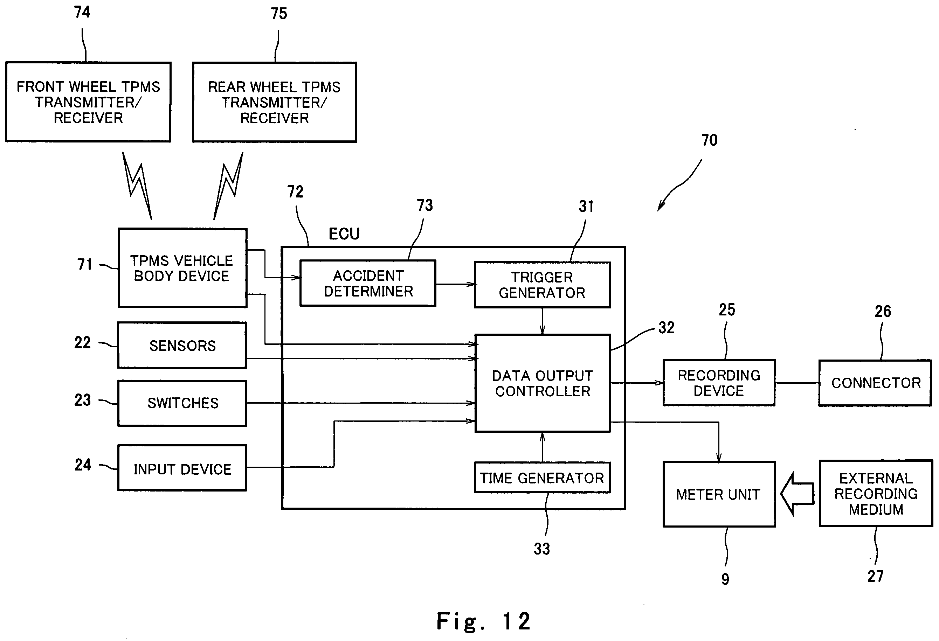

Fig. 12 is a block diagram showing an event data recorder 70 built into a motorcycle according to a third embodiment of the present invention. The same components as those in the first embodiments are identified by the same reference numerals and will not be further described. As shown in Fig. 12, a TPMS vehicle body device 71 constituting a tire pressure monitoring system (TPMS) is mounted in the event data recorder 70. A front wheel TPMS transmitter/receiver 74 is attached to the front wheel 2 (see Fig. 1), while a rear wheel TPMS transmitter/receiver 75 is attached to the rear wheel 3 (see Fig. 1). To be specific, the TPMS vehicle body device 71 carries out wireless communication between the front wheel TPMS transmitter/receiver 74 and the rear wheel TPMS transmitter/receiver 75, thereby monitoring the tire pressure. The front wheel 2 and the rear wheel 3 are, as shown in Fig. 1, exposed at front and rear ends of the vehicle body.

An ECU 72 includes an accident determiner 73, the trigger generator 31, the data output controller 32, and the time generator 33. The accident determiner 73 determines whether or not an accident has occurred in the motorcycle 1 based on the tire pressure information output from the TPMS vehicle body device 71. That is, the TPMS vehicle body device 71 and the accident determiner 73 form the accident determination system. To be specific, the accident determiner 73 determines that the accident has occurred, in which the front wheel 2 has collided with an object, if a pressure increase, which is a first predetermined value or larger, has been generated in the tire pressure of the front wheel 2 which is received from the TPMS vehicle body device 71 during driving. In addition, the accident determiner 73 determines that the accident has occurred, in which the front wheel 2 and the rear wheel 3 remain away from the ground surface due to falling or the like, if a pressure decrease, which is a second predetermined value or smaller, continues to be generated for a specified time or longer in the tire pressure of the front wheel 2 and the tire pressure of the rear wheel 3 which are received from the TPMS vehicle body device 72 during driving. Furthermore, the accident determiner 73 may determine that the accident has occurred based on a time-lapse change in the tire pressure during driving. To be specific, the accident determiner 73 may determine that the accident has occurred if the time-lapse change in the tire pressure is outside a predetermined allowable range. The trigger generator 31 sends a trigger to the data output controller 32 if the accident determiner 73 determines that the accident has occurred.

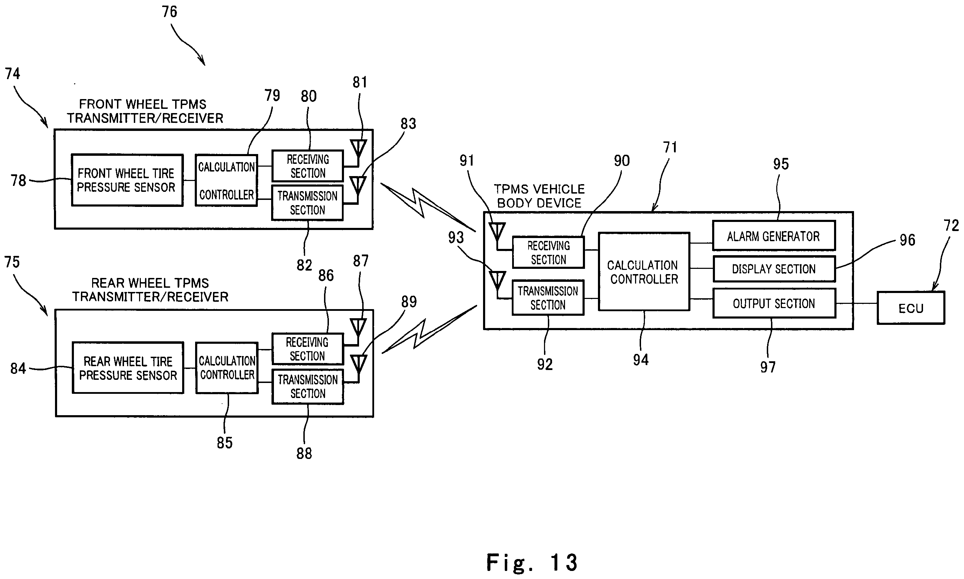

Fig. 13 is a block diagram showing a tire pressure monitoring system (TPMS) 76 used in the event data recorder 70 shown in Fig. 12. As shown in Fig. 13, the tire pressure monitoring system 76 includes a front wheel TPMS transmitter/receiver 74, a rear wheel TPMS transmitter/receiver 75, and the TPMS vehicle body device 71.

The front wheel TPMS transmitter/receiver 74 includes a front wheel tire pressure sensor 78, a calculation controller 79, a receiving section 80, and a transmission section 82. The front wheel tire pressure sensor 78 is a pressure sensor which detects a tire pressure of the front wheel 2. The calculation controller 79 performs control of transmission and reception. The receiving section 80 includes a receiving antenna 81, and receives a request signal transmitted wirelessly from the TPMS vehicle body device 71 via the receiving antenna 81 and demodulates the request signal. The transmission section 82 includes a transmission antenna 83. The transmission section 82 modulates a signal containing tire pressure information which is detected by the front wheel tire pressure sensor 78 and wirelessly transmits a response signal via the transmission antenna 83.

Likewise, the rear wheel TPMS transmitter/receiver 75 includes a rear wheel tire pressure sensor 84, a calculation controller 85, a receiving section 86, and a transmission section 88. The rear wheel tire pressure sensor 84 is a pressure sensor which detects a tire pressure of the rear wheel 3. The calculation controller 85 performs control of transmission and reception. The receiving section 86 includes a receiving antenna 87, and receives a request signal transmitted wirelessly from the TPMS vehicle body device 71 via the receiving antenna 87 and demodulates the request signal. The transmission section 88 includes a transmission antenna 89. The transmission section 88 modulates a signal containing tire pressure information which is detected by the rear wheel tire pressure sensor 71 and wirelessly transmits a response signal via the transmission antenna 89.

The TPMS vehicle body device 71 includes a receiving section 90, a transmission section 92, a calculation controller 94, an alarm generator 95, a display section 96, and an output section 97. The receiving section 90 includes a receiving antenna 91. The receiving section 90 receives the response signals from the front wheel TPMS transmitter/receiver 74 and the rear wheel TPMS transmitter/receiver 75 via the receiving antenna 91, and demodulates them. The transmission section 92 includes a transmission antenna 93. The transmission section 92 modulates the request signals and transmits wirelessly the modulated signals to the front wheel TPMS transmitter/receiver 74 and the rear wheel TPMS transmitter/receiver 75 via the transmission antenna 93. The calculation controller 94 controls transmission and reception and manages the tire pressure. The alarm generator 95 generates an alarm when the calculation controller 94 recognizes an abnormality in the tire pressure. The display section 96 displays an alarm to be presented to the driver when the calculation controller 94 recognizes the abnormality in the tire pressure. The output section 97 transmits the tire pressure information to the ECU 72 externally provided.

The TPMS vehicle body device 71 transmits the request signal assigned with address data alternately to the two TPMS transmitter/receivers 74 and 75 so that timings of the signal transmission and reception are made different between the TPMS transmitter/receiver 74 and the TPMS transmitter/receiver 75. The TPMS transmitter/receiver 74 and the TPMS transmitter/receiver 75 demodulate the associated received request signals, modulate signals containing tire pressure information which are detected by the tire pressure sensors 78 and 84, and wirelessly transmit the modulated signals when the request signals are directed to them.

The calculation controller 94 of the TPMS vehicle body device 71 continuously transmits the received tire pressure information to the ECU 72 via the output section 97. In addition, the calculation controller 94 determines that an abnormality occurs when the received tire pressure is a predetermined threshold or smaller, and instructs the alarm generator 95 to emit an alarm and the display section 96 to display the alarm.

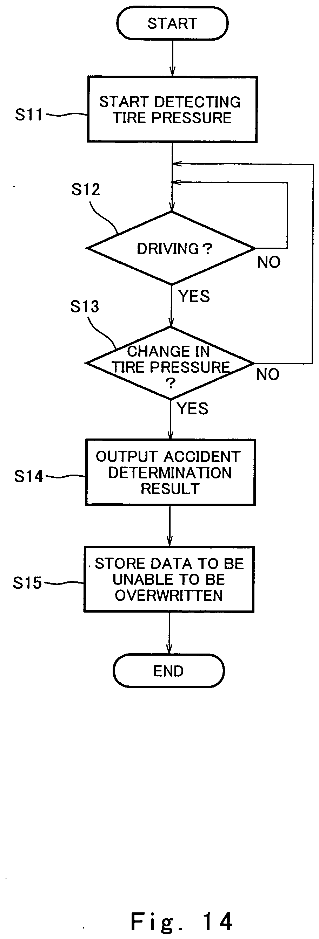

Fig. 14 is a flowchart showing the operation of the event data recorder 70 shown in Fig. 12. As shown in Figs. 12 and 14, initially, when the driver turns on an electric power supply, the TPMS vehicle body device 71 starts detecting the tire pressure (step S11: tire pressure detecting step). Then, the data output controller 32 of the ECU 72 causes the recording device 25 to continuously store the data output from the TPMS vehicle body device 71, the sensors 22 and the switches 23, and to overwrite data area in the order from least recent to most recent if the data exceeds a memory capacity. Then, the accident determiner 73 determines whether or not the motorcycle is driving, with reference to the data output from the speed sensor, for example (step S12: driving state determination step). If it is determined No, the process returns to step S12.

If it is determined Yes, the accident determiner 73 determines whether or not a pressure increase, which is the first predetermined value or larger, has been generated in the tire pressure of the front wheel 2 which is received from the TPMS vehicle body device 71, or whether or not a pressure decrease, which is the second predetermined value or smaller, continues to be generated for a specified time or longer in the tire pressure of the front wheel 2 and the tire pressure of the rear wheel 3 which are received from the TPMS vehicle body device 71 (step S13: accident determination step). If it is determined No, the process returns to step S12. If it is determined Yes, the trigger generator 31 sends a trigger to the data output controller 32 (step S14: accident determination result output step). Then, the data output controller 32 causes the recording device 25 to store the data output from the TPMS vehicle body device 71, the sensors 22, and the switches 23 for a specified time (e.g., 30 seconds) before and after the time point when the data output controller 32 has received the trigger such that the data is unable to overwritten (step S15: recording step). The falling determination step, the driving state determination step, the accident determination step, the accident determination result output step, and the recording step, are executed by the programs stored in the ECU 72.

In accordance with the above described configuration, the event data recorder 70 is controlled based on the tire pressure, activation of the event data recorder 70 due to a shock other than the accident does not substantially take place, unlike the case using the acceleration sensor. In addition, it can be determined that the accident has occurred by detecting a rapid increase in the tire pressure due to the collision of the front wheel 2 of the motorcycle with the object during driving. Further, it can be determined that the accident has occurred by detecting a decrease in the tire pressure due to the fact that the front wheel 2 and the rear wheel 3 of the motorcycle are away from the ground surface due to the falling, etc. Therefore, activation precision of the event data recorder 70 can be improved.

Since the collision of the motorcycle with the objects can be detected without using the acceleration sensor exclusive for collision detection, the number of components can be reduced. Whereas in the present embodiment, the accident determination system is used instead of the falling determination system in the first and second embodiments, both the falling determination system and the accident determination system may be built into the motorcycle, and the trigger generator 31 may send the trigger to the data output controller 32, upon detecting the falling and/or the collision.

### (Embodiment 4)

An event data recorder of a fourth embodiment includes a separation determination system which determines that the driver is away from the vehicle, and a controller is configured to control a recording operation of the recording device based on the determination of the separation determination system. The separation determination system includes a portable device carried by the driver, an on-board device which determines without a contact with the portable device that the portable device is present within a predetermined close range with respect to the vehicle, and a separation determiner which determines that the driver is away from the vehicle during driving, based on information from the on-board device.

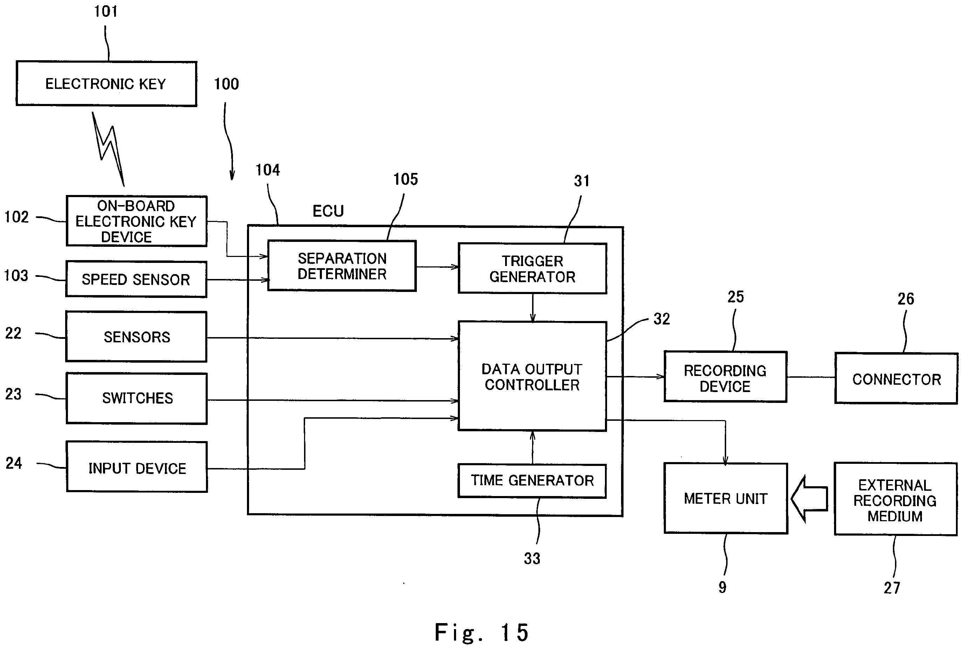

Fig. 15 is a block diagram showing an event data recorder 100 built into the motorcycle according to a fourth embodiment of the present invention. The same components as those in the first embodiments are identified by the same reference numerals and will not be further described. As shown in Fig. 15, the event data recorder 10 is applied to the motorcycle having an electronic key system. The electronic key system is automatically unlocked to enable the engine to be started when a user carrying the electronic key 101 approaches the motorcycle, while the electronic key system is automatically locked to disable the engine to be started when the user carrying the electronic key 101 is away from the motorcycle. To be more specific, an on-board electronic key device 102 having a wireless transmission and receiving section (not shown) is mounted in the motorcycle. The user carries the electronic key 101 inside a pocket or the like.

The on-board electronic key device 102 intermittently transmits a request signal. When the electronic key 101 comes into an area where the request signal is receivable, the electronic key 101 wirelessly transmits a response signal such as an ID code. Receiving the response signal, the on-board electronic key device 102 authenticates the ID code and performs an unlocking operation if the authentication is established. Moreover, communication is made on a regular basis between the electronic key 101 and the on-board electronic key device 102 to check whether or not the electronic key 101 is present within the specified area, after the user straddles the motorcycle and starts the engine.

The on-board electronic key device 102 is coupled to the ECU 104. A speed sensor 103 is coupled to the ECU 104 to detect the driving speed of the motorcycle as a means for determining whether or not the motorcycle is driving. The ECU 104 includes a separation determiner 105 which determines whether or not the driver is away from the motorcycle, based on the information from the on-board electronic key device 102 and from the speed sensor 103. That is, the electronic key 101, the on-board electronic key device 102, the speed sensor 103, the separation determiner 105 form the separation determination system.

To be specific, the separation determiner 105 receives information indicating that the electronic key 101 is not present within the specified area, from the on-board electronic key device 102, and determines that the driver has been thrown from the motorcycle and is away from the motorcycle during driving, if the driving speed detected by the speed sensor 103 at the reception of the information is not zero. The trigger generator 31 sends a trigger to the data output controller 32 when the separation determiner 105 determines that the driver is away from the motorcycle.

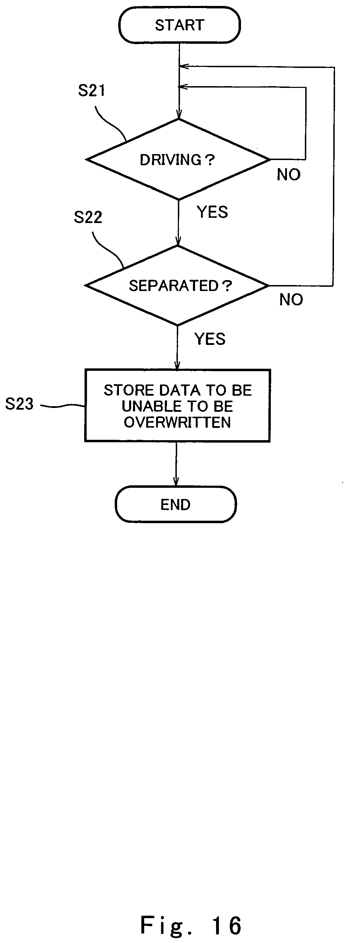

Fig. 16 is a flowchart showing the operation of the event data recorder of Fig. 15. As shown in Figs. 15 and 16, initially, when the driver turns on the electric power supply, the data output controller 32 of the ECU 104 causes the recording device 25 to store the data output from the sensors 22 and the switches 23, and to overwrite data area in the order from least recent to most recent if the data exceeds a memory capacity. Then, the data output controller 32 determines whether or not the motorcycle is driving, with reference to the data output from the speed sensor, for example (step S21: driving state determination step). If it is determined No, the process returns to step S21. If it is determined Yes, the separation determiner 105 determines whether or not the driver has been thrown from the motorcycle and is away from the motorcycle, because of the occurrence of the accident during driving (step S2: separation determination step).

To be specific, if the electronic key 101 carried by the driver is outside a communication area, then the communication between the electronic key 101 and the on-board electronic key device 102 is unestablished. So, based on the information indicating that the communication is unestablished, which is received from the on-board electronic key device 102, the separation determiner 10 determines that the driver is away from the motorcycle. If it is determined No, the process returns to step S21. If it is determined Yes, the trigger generator 31 sends a trigger to the data output controller 32, receiving the information of the determination of the separation. In response to this, the data output controller 32 causes the recording device 25 to store the data output from the sensors 22 and the switches 23 such that the data are unable to be overwritten, for a specified time period (e.g., 30 seconds) before and after the time point when the data output controller 32 has received the trigger. In that case, the data output controller 32 causes the recording device 25 to store the output information at least from the time point when the data output controller 32 has received the trigger until before a specified time (step S23: recording step). The driving state determination step, the separation determination step, and the recording step are executed by programs stored in the ECU 104.

In accordance with the above described configuration, since the accident of the motorcycle can be detected without using an acceleration sensor or the like exclusive for detecting collision, the number of components can be reduced. Whereas in the present embodiment, the electronic key system is used, it may be detected that the driver is away from the motorcycle, by detecting an intensity of an electric wave transmitted all the time from a portable information communication device (e.g., cellular phone) carried by the driver. Alternatively, an on-board device which electrically or magnetically determines that the portable device is away from the motorcycle may be provided. In that case, the portable device carried by the driver may be an IC tag and the on-board device may be a tag reader. In a further alternative, the portable device carried out by the driver may be a magnetic member, and the on-board device may be a magnetic sensor which is able to detect the magnetic member during driving. In a further alternative, it may be detected that the driver is away from the motorcycle during driving, based on the information from a proximity sensor or a positioning sensor which detects that the body of the driver is present in a specified position (driver's position). In that case, as the sensor, a far-infrared sensor, an optical sensor, or an ultrasonic sensor, etc may be used.

Whereas in the present embodiment, the separation determination system is used instead of the falling determination system in the first and second embodiments or the accident determination system in the third embodiment, the falling determination system and/or the accident determination system and the separation determination system may be built into the motorcycle and the trigger generator 31 may be configured to send a trigger to the data output controller 32 when a falling, an accident/or separation is detected.

### (Embodiment 5)

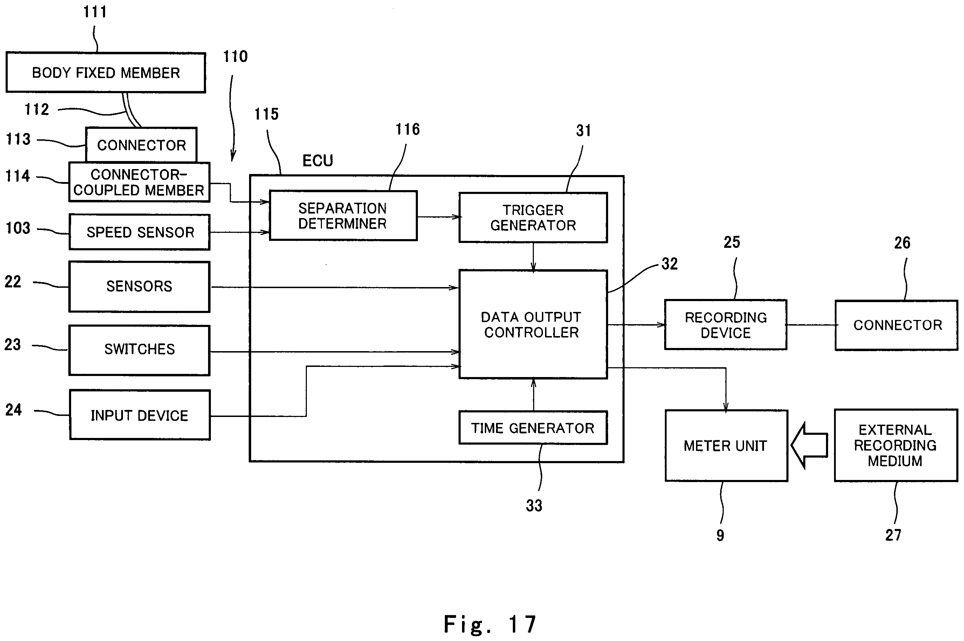

Fig. 17 is a block diagram showing an event data recorder 100 built into the motorcycle according to a fifth embodiment of the present invention. The same components as those in the first embodiments are identified by the same reference numerals and will not be further described. As shown in Fig. 17, the event data recorder 110 includes a body fixed member 111 such as an arm band which is fixed to the body of the driver, a coupling member 112 such as a string which is coupled at one end thereof to the body fixed member 111, a connector 113 provided at an opposite end of the coupling member 112, and a connector-coupling member 114 which is provided in the vehicle body and is removably coupled with the connector 113. The connector 113 and the connector-coupling member 114 are coupled to each other during driving. The connector 113 of the coupling member 112 is removed from the connector-coupling member 114 when the body fixed member 111 is away a specified distant or larger from the connector-coupling member 114 and the coupling member 112 is thereby subjected to a tension of a specified value or larger.

The connector-coupling member 114 is provided with a fitting detector (not shown), which is able to detect whether or not the connector q13 is fittingly coupled to the connector-coupling member 114. One example of the fitting detector (not shown) may be a fitting detecting switch which is turned off by pressing from the connector 113 in a fitting state and is turned on without a load applied from the connector 113 in an unfitting state.

The connector 113 is coupled to the ECU 115. The speed sensor 103 is coupled to the ECU 115 to detect the driving speed of the motorcycle as a means for detecting whether or not the motorcycle is driving. The ECU 115 includes a separation determiner 116 which determines whether or not the driver is away from the motorcycle, based on the information from the connector-coupling member 114 and from the speed sensor 103. That is, the body fixed member 111, the coupling member 112, the connector 113, the connector-coupled member 114, the speed sensor 103, and the separation determiner 116 form a separation determination system.

To be specific, the separation determiner 116 determines that the driver has been thrown from the motorcycle, and is away from the motorcycle during driving, if it is detected that the connector 113 of the coupling member 112 is separated from the connector-coupled member 114 and the driving speed detected by the speed sensor 103 at the reception of the information is not zero. The trigger generator 31 sends a trigger to the data output controller 32 when the separation determiner 116 determines that the driver is away from the motorcycle.

In accordance with the above described configuration, the accident of the motorcycle can be detected using a simple and inexpensive configuration. Whereas in the present embodiment, the separation determination system is used instead of the falling determination system in the first and second embodiments or the accident determination system in the third embodiment, the falling determination system and/or the accident determination system and the separation determination system may be built into the motorcycle and the trigger generator 31 may be configured to transmit a trigger to the data output controller 32 when a falling, an accident/or separation is detected.

### (Embodiment 6)

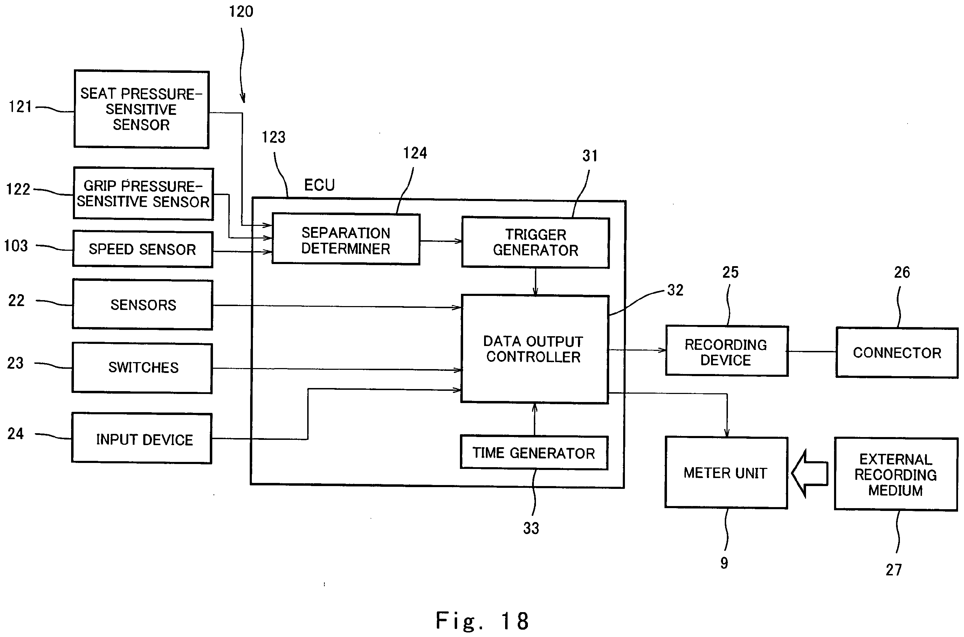

Fig. 18 is a block diagram showing an event data recorder 120 built into the motorcycle according to a sixth embodiment of the present invention. The same components as those in the first embodiments are identified by the same reference numerals and will not be further described. As shown in Fig. 18, the event data recorder 120 includes a seat pressure-sensitive sensor 121 which detects that the driver is seated on the seat 14 (Fig. 1), and a grip pressure-sensitive sensor 122 which detects that the driver is gripping a grip of the handle 6 (Fig. 1). The seat pressure-sensitive sensor 121 and the grip pressure-sensitive sensor 122 are coupled to the ECU 123. The speed sensor 103 is coupled to the ECU 123 to detect the driving speed of the motorcycle as a means for determining whether or not the motorcycle is driving. The ECU 123 includes a separation determiner 124 which determines whether or not the driver is away from the motorcycle, based on the data output from the seat pressure-sensitive sensor 121, from the grip pressure-sensitive sensor 122 and from the speed sensor 103. That is, the seat pressure-sensitive sensor 121, the grip pressure-sensitive sensor 122, and the separation determiner 124 form a separation determination system.

To be specific, the separation determiner 124 determines that the hand of the driver is away from the handle 6(Fig. 1), the driver is away from the seat 14 (Fig. 1), and the driver has been thrown from the motorcycle during driving, if the data output from the seat pressure-sensitive sensor 121 continues to be a predetermined value or smaller (load applied to the seat 14 is a predetermined value or smaller) for a predetermined time or longer, the data output from the grip pressure-sensitive sensor 122 continues to be a predetermined value or smaller (load applied to the grip of the handle 6 is a predetermined value or smaller) for a predetermined time or longer, and the driving speed detected by the speed sensor 103 is not zero. The trigger generator 31 sends a trigger to the data output controller 32 when the separation determiner 124 determines that the driver has been thrown from the motorcycle.

In accordance with the above described configuration, it can be detected that the driver has been thrown from the motorcycle, using a simple configuration. Whereas in the present embodiment, the separation determination system is used instead of the falling determination system in the first and second embodiments or the accident determination system in the third embodiment, the falling determination system and/or the accident determination system and the separation determination system may be built into the motorcycle and the trigger generator 31 may be configured to send a trigger to the data output controller 32 when a falling , an accident/or a separation is detected.

Whereas the motorcycle has been described by way of example in the above described embodiments, the event data recorder of the present invention may be applied to vehicles other than the motorcycles, such as personal watercraft (PWC), or straddle-type off road vehicles.

As this invention may be embodied in several forms without departing from the spirit of essential characteristics thereof, the present embodiments are therefore illustrative and not restrictive, since the scope of the invention is defined by the appended claims rather than by the description preceding them, and all changes that fall within metes and bounds of the claims, or equivalence of such metes and bounds thereof are therefore intended to be embraced by the claims.

## Claims

1. An event data recorder (20), comprising:
a falling determination system (21, 30) which determines whether or not a vehicle has fallen;
a recording device (25) which stores data output from devices mounted in the vehicle; and
a controller (31, 32) which controls a recording operation of the recording device
**characterized by** further comprising
a driving state determination system (22, 23, 24) which determines whether or not the vehicle is driving,
and **characterized in that** the control of the controller (31, 32) is based on determination of the driving state determination system and determination of the falling determination system and causes the recording device to store data output from the devices at least before the vehicle has fallen such that the data is unable to be overwritten, if it is determined that the vehicle has fallen during driving.

2. A motorcycle (1) **characterized by** comprising:
an event data recorder (20) including:
a driving state determination system (22, 23, 24) which determines whether or not a vehicle body is driving;
a falling determination system (21, 30) which determines whether or not the vehicle body has fallen;
a recording device (25) which stores data output from devices mounted in the vehicle body;
a controller (31, 32) which controls a recording operation of the recording device based on determination of the driving state determination system and determination of the falling determination system and causes the recording device to store data output from the devices at least before the vehicle has fallen such that the data is unable to be overwritten, if it is determined that the vehicle has fallen during driving; and
a bank angle detecting device which detects a bank angle of the vehicle body;
wherein the recording device (25) is configured to store data output from at least the bank angle detecting device.

3. An information recording method comprising:
a falling determination step for determining whether or not a vehicle has fallen; and
a recording step for recording information output from devices mounted in the vehicle,
said method being **characterized in** further comprising a driving state determination step for determining whether or not the vehicle is driving,
and **in that** said recording step is for recording said information output at least before the vehicle has fallen such that the information is unable to be overwritten, when it is determined that the vehicle has fallen during driving;
and **in that** in the falling determination step, it is determined whether or not the vehicle has fallen, based on a result of detection of a posture of the vehicle.

4. The event data recorder (20) according to claim 1,
wherein the controller (31, 32) causes the recording device to store the data output from the devices as time-series data, to overwrite data area in the order from least recent to most recent if the data exceeds a predetermined memory capacity and to store analysis data different from the time-series data in a cumulative manner, when it is determined that the vehicle has not fallen.

5. The event data recorder (20) according to claim 4,
wherein the controller causes the recording device (25) to store as the analysis data frequency of past failures for each of the devices and uses time for each of engine speeds.

6. The event data recorder (20) according to any one of claims 1, 4, and 5, comprising: a connector (26) which downloads the data stored in the recording device to an external storage medium (27).

7. The event data recorder according to any one of claims 1, and 4 to 6, wherein the falling determination system (21, 30) determines whether or not the vehicle has fallen using conditions differed between when the vehicle is driving straight ahead and when the vehicle is turning.

8. The event data recorder (20) according to any one of claims 1, and 4 to 7, comprising:
a separation determination system (102) which determines that the driver is away from the vehicle;
wherein the controller controls a recording operation of the recording device based on determination of the driving state determination system and determination of the separation determination system; and
the controller causes the recording device to store the data output from the devices at least before the driver is away from the vehicle such that the data is unable to be overwritten, if it is determined that the driver is away from the vehicle during driving.

9. The event data recorder according to any one of claims 1, and 4 to 8, wherein
the falling determination system (21, 30) includes a posture detecting sensor (21) which detects a posture of the vehicle and a determiner which determines whether or not the vehicle has fallen based on a result of detection of the posture detecting sensor (21).

## Patentansprüche

1. Ereignisdatenschreiber (20), der umfasst:
ein System (21, 30) zur Bestimmung von Umfallen, das bestimmt, ob ein Fahrzeug umgefallen ist oder nicht;
eine Aufzeichnungsvorrichtung (25), die eine Datenausgabe von in dem Fahrzeug montierten Vorrichtungen speichert; und
eine Steuerung (31, 32), die einen Aufzeichnungsvorgang der Aufzeichnungsvorrichtung steuert,
**dadurch gekennzeichnet, dass** er weiterhin umfasst:
ein System (22, 23) zur Bestimmung des Fahrstatus, das bestimmt, ob ein Fahrzeug fährt oder nicht,
und **dadurch gekennzeichnet, dass** ein Steuern durch die Steuerung (31, 32) auf der Bestimmung durch das System zur Bestimmung des Fahrstatus und der Bestimmung durch das System zur Bestimmung von Umfallen basiert, und veranlasst, dass die Aufzeichnungsvorrichtung eine Datenausgabe der Vorrichtungen speichert wenigstens bevor das Fahrzeug umgefallen ist, so dass die Daten nicht überschrieben werden können, wenn während der Fahrt bestimmt wird, dass das Fahrzeug umgefallen ist.

2. Motorrad (1), das **dadurch gekennzeichnet ist, dass** es umfasst:
einen Ereignisdatenschreiber (20), der umfasst:
ein System (22, 23) zur Bestimmung des Fahrstatus, das bestimmt, ob eine Fahrzeugskarosserie fährt oder nicht,
ein System (21, 30) zur Bestimmung von Umfallen, das bestimmt, ob die Fahrzeugskarosserie umgefallen ist oder nicht;
eine Aufzeichnungsvorrichtung (25), die eine Datenausgabe von in dem Fahrzeugkörper montierten Vorrichtungen speichert;
eine Steuerung (31, 32), die einen Aufzeichnungsvorgang der Aufzeichnungsvorrichtung steuert basierend auf der Bestimmung durch das System zur Bestimmung des Fahrstatus und der Bestimmung durch das System zur Bestimmung von Umfallen basiert, und die veranlasst, dass die Aufzeichnungsvorrichtung eine Datenausgabe der Vorrichtungen speichert wenigstens bevor das Fahrzeug umgefallen ist, so dass die Daten nicht überschrieben werden können, wenn während der Fahrt bestimmt wird, dass das Fahrzeug umgefallen ist; und
eine Querneigungswinkelerfassungsvorrichtung, die einen Querneigungswinkel des Fahrzeugkörpers erfasst;
wobei die Aufzeichnungsvorrichtung (25) dazu konfiguriert ist, eine Datenausgabe von wenigstens der Querneigungswinkelerfassungsvorrichtung zu speichern.

3. Informationsaufzeichnungsverfahren, das umfasst:
einen Schritt zur Bestimmung von Umfallen, der bestimmt, ob das Fahrzeug umgefallen ist oder nicht; und
einen Aufzeichnungsschritt, der eine Datenausgabe von in dem Fahrzeug montierten Vorrichtungen speichert,
wobei das Verfahren **dadurch gekennzeichnet ist, dass** es weiterhin einen Schritt zur Bestimmung eines Fahrstatus umfasst, der bestimmt, ob das Fahrzeug fährt oder nicht,
und dadurch, dass der Aufzeichnungsschritt dient zum Aufzeichnen der Informationsausgabe wenigstens bevor das Fahrzeug umgefallen ist, so dass die Daten nicht überschrieben werden können, wenn während der Fahrt bestimmt wird, dass das Fahrzeug umgefallen ist;
und dadurch, dass in dem Schritt zur Bestimmung von Umfallen bestimmt wird, ob das Fahrzeug umgefallen ist oder nicht, basierend auf einem Ergebnis der Erfassung einer Haltung des Fahrzeugs.

4. Ereignisdatenschreiber (20) gemäß Anspruch 1,
wobei die Steuerung (31, 32) veranlasst, dass die Aufzeichnungsvorrichtung die Datenausgabe von den Vorrichtungen als Zeitseriendaten speichert, einen Datenbereich in einer Reihenfolge von am wenigsten aktuell zu am aktuellsten überschreibt, wenn die Daten eine vorbestimmte Speicherkapazität überschreiten, und Analysedaten, die sich von den Zeitseriendaten unterscheiden, auf kumulative Weise speichert, wenn bestimmt wird, dass das Fahrzeug nicht umgefallen ist.

5. Ereignisdatenschreiber (20) gemäß Anspruch 4,
wobei die Steuerung die Aufzeichnungsvorrichtung (25) dazu veranlasst, als Analysedaten die Häufigkeit der vergangenen Ausfälle für jede der Vorrichtungen und die Verwendungszeit für jede der Motordrehzahlen zu speichern.

6. Ereignisdatenschreiber (20) gemäß einem der Ansprüche 1, 4 und 5, der umfasst: einen Verbinder (26), der die in der Aufzeichnungsvorrichtung gespeicherten Daten auf ein externes Speichermedium (27) herunterlädt.

7. Ereignisdatenschreiber gemäß einem der Ansprüche 1, und 4 bis 6, wobei das System (21, 30) zur Bestimmung von Umfallen bestimmt, ob das Fahrzeug umgefallen ist oder nicht, mit Hilfe von Bedingungen, die sich unterscheiden, je nachdem ob das Fahrzeug geradeaus oder um eine Kurve fährt.

8. Ereignisdatenschreiber (20) gemäß einem der Ansprüche 1, und 4 bis 7, der umfasst:
ein Trennungsbestimmungssystem (102), das bestimmt, ob der Fahrer von dem Fahrzeug getrennt worden ist;
wobei die Steuerung einen Aufzeichnungsvorgang der Aufzeichnungsvorrichtung steuert basierend auf der Bestimmung durch das System zur Bestimmung des Fahrstatus und der Bestimmung durch das Trennungsbestimmungssystem; und
die Steuerung die Aufzeichnungsvorrichtung veranlasst, die Datenausgabe von den Vorrichtungen zu speichern wenigstens bevor der Fahrer von dem Fahrzeug getrennt worden ist, so dass die Daten nicht überschrieben werden können, wenn während der Fahrt bestimmt wird, dass der Fahrer von dem Fahrzeug getrennt worden ist.

9. Ereignisdatenschreiber gemäß einem der Ansprüche 1, und 4 bis 8, wobei
das System (21, 30) zur Bestimmung von Umfallen umfasst: einen Haltungserfassungssensor (21), der eine Haltung des Fahrzeugs erfasst, und eine Bestimmungseinrichtung, die bestimmt, ob das Fahrzeug umgefallen ist oder nicht basierend auf einem Ergebnis oder einer Erfassung durch den Haltungserfassungssensor (21).

## Revendications

1. Enregistreur de données d'événements (20) comprenant :
un système de détermination de chute (21, 30) qui détermine si un véhicule est tombé ou non,
un appareil enregistreur (25) qui stocke des données émises par des dispositifs agencés dans le véhicule, et
un organe de commande (31, 32) qui commande une opération d'enregistrement de l'appareil enregistreur ;
**caractérisé en ce qu'**il comprend en outre
un système de détermination d'état de conduite (22, 23, 24) qui détermine si le véhicule roule ou non,
et **caractérisé en ce que** la commande effectuée par l'organe de commande (31, 32) repose sur la détermination réalisée par le système de détermination d'état de conduite et la détermination réalisée par le système de détermination de chute et amène l'appareil enregistreur à stocker des données émises par les dispositifs au moins avant que le véhicule ne tombe de manière qu'elles ne puissent pas être écrasées, s'il est déterminé que le véhicule est tombé pendant qu'il roule.

2. Motocycle (1) **caractérisé en ce qu'**il comprend :
un enregistreur de données d'événements (20) comportant :
un système de détermination d'état de conduite (22, 23, 24) qui détermine si une carrosserie de véhicule roule ou non,
un système de détermination de chute (21, 30) qui détermine si la carrosserie du véhicule est tombée ou non,
un appareil enregistreur (25) qui stocke des données émises par des dispositifs agencés dans la carrosserie du véhicule,
un organe de commande (31, 32) qui commande une opération d'enregistrement de l'appareil enregistreur en fonction de la détermination réalisée par le système de détermination d'état de conduite et de la détermination réalisée par le système de détermination de chute, et qui amène l'appareil enregistreur à stocker des données émises par les dispositifs au moins avant que le véhicule ne tombe de manière qu'elles ne puissent pas être écrasées, s'il est déterminé que le véhicule est tombé pendant qu'il roule, et
un appareil détecteur d'angle d'inclinaison qui détecte un angle d'inclinaison de la carrosserie du véhicule ;
ledit appareil enregistreur (25) étant configuré pour stocker des données émises au moins par l'appareil détecteur d'angle d'inclinaison.

3. Procédé d'enregistrement d'informations, comprenant :
une étape de détermination de chute visant à déterminer si le véhicule est tombé ou non, et
une étape d'enregistrement visant à enregistrer des informations émises par des dispositifs agencés dans le véhicule ;
ledit procédé étant **caractérisé en ce qu'**il comprend en outre une étape de détermination d'état de conduite visant à déterminer si le véhicule roule ou non,
et **en ce que** ladite étape d'enregistrement sert à enregistrer lesdites informations émises au moins avant que le véhicule ne tombe, de manière que les informations ne puissent pas être écrasées, s'il est déterminé que le véhicule tombe pendant qu'il roule,
et **en ce que**, dans le cadre de l'étape de détermination de chute, il est déterminé si le véhicule tombe ou non, en fonction du résultat de la détection de la posture du véhicule.

4. Enregistreur de données d'événements (20) selon la revendication 1,
dans lequel l'organe de commande (31, 32) amène l'appareil enregistreur à stocker les données émises par les dispositifs sous la forme de données chronologiques, à écraser une zone de données selon un ordre allant des données les moins récentes aux plus récentes si les données dépassent une capacité de mémoire prédéterminée et à stocker des données d'analyse différentes des données chronologiques, de manière cumulative, lorsqu'il est déterminé que le véhicule n'est pas tombé.

5. Enregistreur de données d'événements (20) selon la revendication 4,
dans lequel l'organe de commande amène l'appareil enregistreur (25) à stocker, en tant que données d'analyse, la fréquence de défaillances passées pour chacun des dispositifs et la durée d'utilisation pour chacune des vitesses du moteur.

6. Enregistreur de données d'événements (20) selon l'une quelconque des revendications 1, 4 et 5, comprenant : un connecteur (26) qui télécharge les données stockées dans l'appareil enregistreur vers un support d'enregistrement externe (27).

7. Enregistreur de données d'événements selon l'une quelconque des revendications 1, et 4 à 6, dans lequel le système de détermination de chute (21, 30) détermine si le véhicule est tombé ou non au moyen de conditions différentiées entre des moments où le véhicule roule en ligne droite et des moments où le véhicule tourne.

8. Enregistreur de données d'événements (20) selon l'une quelconque des revendications 1, et 4 à 7, comprenant :
un système de détermination de séparation (102) qui détermine que le pilote est séparé du véhicule ;
ledit organe de commande commandant une opération d'enregistrement de l'appareil enregistreur en fonction de la détermination réalisée par le système de détermination d'état de conduite et de la détermination réalisée par le système de détermination de séparation, et
ledit organe de commande amenant l'appareil enregistreur à stocker les données émises par les dispositifs au moins avant que le pilote ne se sépare du véhicule, de manière qu'elles ne puissent pas être écrasées, s'il est déterminé que le pilote s'est séparé du véhicule pendant qu'il roule.

9. Enregistreur de données d'événements selon l'une quelconque des revendications 1, et 4 à 8, dans lequel
le système de détermination de chute (21, 30) comporte un capteur de détection de posture (21) qui détecte la posture du véhicule, et un déterminateur qui détermine si le véhicule est tombé ou non en fonction du résultat ou de la détection provenant du capteur de détection de posture (21).
